# EUROPEAN PATENT APPLICATION

(11) **EP 4 509 804 A1**
(43) Date of publication of application: **19.02.2025**
(21) Application number: 24191362.3
(22) Date of filing: 29.07.2024
(51) Int. Cl.: G01G 19/02

(54) **REMOTE WEIGHBRIDGE OPERATION**

(30) Priority: 14.08.2023 GB 202312415
(71) Applicant: Illinois Tool Works Inc., Glenview IL 60025 (US)
(72) Inventor: TOMLINSON, Philip Andrew, Glenview, 60025 (US); WHITE, David John, Glenview, 60025 (US)
(74) Representative: HGF

(57) **Abstract**

A computer-implemented method for remote operation of one or more weighbridges. The method comprises: receiving, at a user terminal comprising a display: weight signalling from a weighbridge, the weight signalling indicative of a weight of a load present on the weighbridge; and image signalling from an image capture device located at the weighbridge, the image signalling indicative of a real-time image of the weighbridge captured by the image capture device; displaying, on the display, a weighbridge use indicator indicative of the weight present on the weighbridge in dependence on the weight signalling and a real-time image of the weighbridge in dependence on the image signalling; receiving, from the user terminal, control signalling indicative of an operator user input to control an operation element of the weighbridge; and in response to receiving the control signalling, controlling the operation element according to the control signalling.

## Description

### FIELD OF INVENTION

The present invention relates to operation of a weighbridge, for example relating to remotely operating and monitoring activity at a weighbridge. Examples provide a computer-implemented methods, systems, user terminals and computer readable instructions.

### INTRODUCTION

Weighbridges (sometimes known as "truck scales") are apparatus which can weigh a vehicle, such as a truck or van. They are often used for commercial purposes to determine the weight of an industrial vehicle, such as a goods carrier vehicle, recycling or waste disposal vehicle, tanker vehicle, or other vehicle used to transport cargo. The weighbridge may comprise a platform onto which the vehicle is driven and stopped, while the weight of the vehicle is recorded. They can be useful to tracking the transportation of cargo and goods and readily determining the amount of goods loaded onto the vehicle, by subtracting the gross weight of the empty vehicle from the measured weight of the loaded vehicle.

Typically, a weighbridge will be manned by a weighbridge operator to have a clear view of the weighbridge, ensure the vehicle is stopped on the weighbridge in the appropriate position (e.g. all wheels loaded fully on the weighbridge and not overhanging one side), communicate with the driver, check the registration number plate of the vehicle, and to issue tickets (documentation indicating information about the vehicle, load, weight, date and time of weighing, etc. for management of the vehicle and load).

It may be advantageous to be able to allow at least part of the weighbridge use to be performed by a remotely located weighbridge operator, while still ensuring the operation is conducted safely and according to applicable ruled and regulations, to reduce the reliance on having a qualified weighbridge operator physically at the site of the weighbridge. This may be particularly of interest for facilities with plural weighbridges. It may be advantageous to reduce use of hand-written paper records and facilitate computerised records, to reduce potential fraud and automate linking of the weighbridge operation data with other related data, such as databases of information of the goods carried, of the haulier, of the customer, and/or with other computer-captured data relating to the weighbridge operation.

### SUMMARY OF THE INVENTION

The present invention may address the above problems. In an aspect there is provided a computer-implemented method for remote operation of one or more weighbridges, the method comprising:
receiving, at a user terminal comprising a display:
   weight signalling from a weighbridge, the weight signalling indicative of a weight of a load present on the weighbridge; and
   image signalling from an image capture device located at the weighbridge, the image signalling indicative of a real-time image of the weighbridge captured by the image capture device;
displaying, on the display, a weighbridge use indicator indicative of the weight present on the weighbridge in dependence on the weight signalling and a real-time image of the weighbridge in dependence on the image signalling;
receiving, from the user terminal, control signalling indicative of an operator user input to control an operation element of the weighbridge; and
in response to receiving the control signalling, controlling the operation element according to the control signalling.

The method may comprise displaying the weight of a load currently present on the weighbridge in dependence on the received weight signalling. The displayed weight of the load may be at least part of the weighbridge use indicator. The weighbridge use indicator may comprise, in other examples, a colour coded visual indicator indicative of a weight or change in weight on a weighbridge. The weighbridge use indicator may comprise, in other examples, a highlighting of a weighbridge, the highlighting configured to indicate a change in weight, a weight corresponding to an expected vehicle weight, a weight corresponding to a person, or other unit of weight. The highlighting may comprise any change in visual appearance to indicate that there is particular activity at the corresponding weighbridge (e.g. flashing, bold font, displaying a border on the display screen relating to the weighbridge information).

The method may comprise: determining, in dependence on the weight signalling and a previous weight present on the weighbridge, whether there is a change in weight present on the weighbridge, the change in weight exceeding a predetermined threshold; and in response to determining the change in weight present on the weighbridge exceeds the predetermined threshold, displaying the weighbridge use indicator, the weighbridge use indicator indicative of the change in weight present on the weighbridge. Transmitting the image signalling may be performed in response to determining that the change in weight present on the weighbridge exceeds the predetermined threshold.

Displaying the real-time image of the weighbridge may comprise: displaying, on the display, an image indicator indicative of the availability of a real-time image of the weighbridge; receiving display-on signalling indicative of an operator user input, the display-on signalling to cause the real-time image to be displayed on the display, and displaying the real-time image of the weighbridge on the display in response to the display-on signalling.

The image capture device may comprise an automatic number plate recognition, ANPR, device configured to determine a vehicle registration number from the real-time image of the weighbridge and transmit the vehicle registration number to the user terminal.

The vehicle registration number may be displayed on the display with the weighbridge use indicator.

The operation element may comprise an entry barrier to the weighbridge and the control signalling controls movement of the entry barrier. The operation element may comprise an exit barrier from the weighbridge and the control signalling controls movement of the exit barrier. The operation element may comprise a traffic light indicator, and the control signalling controls light output by the traffic light indicator. The operation element may comprise the image capture device, and the control signalling is configured to control operation of the image capture device. One or more of these may be present.

The method may comprise: receiving, from the weighbridge, weight signalling indicative of a negative weight value of a load currently present on the weighbridge; in response to receipt of the weight signalling indicative of a negative weight value present on the weighbridge, displaying a zeroing alert on the display to indicate that zeroing of the weighbridge is to be performed; receiving a zeroing signal indicative of the operator user providing a zeroing input in response to the displayed zeroing alert; and in response to receiving the zeroing signal at the weighbridge, zeroing the weighbridge to measure a zero weight on the weighbridge.

The method may comprise: receiving, by the user terminal, from a call apparatus at the weighbridge, call initiation signalling indicative of a weighbridge user initiating a communication connection from the call apparatus at the weighbridge to the user terminal; and providing a communication channel between the call apparatus at the weighbridge and the user terminal.

The method may comprise: displaying, on the display, a call indicator in response to a weighbridge user initiating the communication connection from the call apparatus at the weighbridge; and in response to the operator user providing a user input to indicate that the communication connection is accepted, via the call indicator, providing the communication channel.

The method may comprise: receiving, by a call apparatus at the weighbridge, from the user terminal, call initiation signalling indicative of an operator user initiating a communication connection from the user terminal to the call apparatus at the weighbridge; and providing a communication channel between the user terminal and the call apparatus at the weighbridge.

The method may comprise: displaying, on the display, a call initiation object; receiving an operator user input via the call initiation object; and in response to receipt of the operator user input, providing the communication channel.

The one or more weighbridges may comprise a plurality of weighbridges, and the method may comprise:
receiving, from each of the plurality of weighbridges, at the user terminal comprising the display:
   weight signalling indicative of a weight of a load present on each of the weighbridges; and
   image signalling from respective image capture devices located at each of the weighbridges, the image signalling indicative of a real-time image of each of the weighbridges captured by the image capture devices;
displaying, on the display, a weighbridge use indicator for each of the weighbridges in dependence on the weight signalling and a real-time image of each of the weighbridges in dependence on the image signalling;
receiving, from the user terminal, control signalling indicative of an operator user input to control an operation element of at least one of the weighbridges; and
in response to receiving the control signalling, controlling the operation element of the at least one of the weighbridges according to the control signalling.

The weighbridge use indicator may comprise one or more of:
a weight change indicator indicative of a change in weight detected on the weighbridge;
a zero weighbridge use indicator indicative of no load present on the weighbridge;
an error weighbridge indicator indictive of a negative weight detected on the weighbridge; and
an offline weighbridge indicator indicative of no communication present between the corresponding weighbridge and the apparatus.

The method may comprise: retrieving, at the user terminal, load information indicative of an identifier of the load; associating the load information with the weight of the load determined from the weight signalling; and logging the load information associated with the weight of the load.

In an aspect there is provided a system comprising: at least one weighbridge; and a user terminal comprising a display, the user terminal located remotely from the weighbridge; wherein any computer-implemented method disclosed here is performed in the cloud or at a server remote from the at least one weighbridge.

In such a system, the weighbridge may comprise a weighing platform, and one or more of:
an entry barrier configured to, when open, allow passage of a vehicle onto the weighing platform, and when closed, prevent passage of a vehicle onto the weighing platform;
an exit barrier configured to, when open, allow passage of a vehicle off the weighing platform, and when closed, prevent passage of a vehicle off the weighing platform;
a traffic light indicator configured to indicate a vehicle driving request, with respect to the weighing platform, to a driver of a vehicle; and
an image capture device configured to capture a real-time image of the weighbridge.

In an aspect there is provided a user terminal comprising a display, the user terminal located remotely from one or more weighbridges and for remote operation of the one or more weighbridges, the user terminal configured to:
receive:
   weight signalling from a weighbridge, the weight signalling indicative of a weight of a load present on the weighbridge, and
   image signalling from an image capture device located at the weighbridge, the image signalling indicative of a real-time image of the weighbridge captured by the image capture device;
display, on the display:
   a weighbridge use indicator indicative of the weight present on the weighbridge in dependence on the weight signalling, and
   a real-time image of the weighbridge in dependence on the image signalling; and
transmit control signalling to the weighbridge, the control signalling indicative of an operator user input to the user terminal and configured to control an operation element of the weighbridge.

In an aspect there is provided a computer readable storage medium including instructions to perform any computer-implemented method disclosed herein.

### BRIEF DESCRIPTION OF THE DRAWINGS

One or more examples will now be described, by way of example only, with reference to the accompanying drawings, in which:
Figure 1 show an example of a weighbridge;
Figure 2 shows an example of a method of remote operation of a weighbridge according to examples disclosed herein;
Figure 3 shows an example system comprising a plurality of weighbridges which can communicate with a remote user terminal via the cloud, according to examples disclosed herein;
Figure 4 illustrates an example display screen on a user terminal indicating information about a plurality of weighbridges, according to examples disclosed herein;
Figure 5 is a flow diagram illustrating an example of indicating a detected weight change according to examples disclosed herein;
Figure 6 is a flow diagram illustrating an example of remotely zeroing a weighbridge according to examples disclosed herein;
Figures 7 and 8 are flow diagrams illustrating examples of communication between a weighbridge and a user terminal according to examples disclosed herein;
Figure 9 illustrates a system according to examples disclosed herein; and
Figure 10 illustrates a user terminal according to examples disclosed herein.

### DETAILED DESCRIPTION

The present invention relates to a remote operation of one or more weighbridges. Typically, a weighbridge will be manned by a weighbridge operator who is physically present at the weighbridge, who visually inspects the use of the weighbridge, and who manually issues tickets / paperwork indicating the data recorded through using the weighbridge.

It may be advantageous to be able to allow at least part of the weighbridge use to be performed by a remotely located weighbridge operator, while still ensuring the operation is conducted safely and according to applicable rules and regulations, to reduce the reliance on having a qualified weighbridge operator physically at the site of the weighbridge. This may be particularly of interest for facilities with plural weighbridges. For example, if a company has weighbridges located at different geographical sites e.g. different towns, different weighbridge operators are typically located at those different sites. As another example, if a weighbridge is typically used (and therefore manned by a weighbridge operator) during daytime hours (e.g. 8am to 6pm), but an unusual case requires that a vehicle is weighed by the weighbridge outside those hours (e.g. 2am), then a weighbridge operator may be needed to attend outside of their usual working pattern, which is undesirable.

It may be advantageous to reduce use of hand-prepared paper records or hand-completed electronic forms, and facilitate the use of improved computerised records, to reduce potential fraud and to automate linking of the weighbridge operation data with other related data, such as databases of information of the goods carried, of the haulier, of the customer, and/or with other computer-captured data relating to the weighbridge operation.

The present invention may address the problem of requiring a weighbridge operator to be physically located at the weighbridge site during use, by allowing for remote operation of the weighbridge. The present invention may address the problem of improving record-keeping by computerising the data captured during weighbridge use and facilitating linking of that data with other computerised records to provide a secure and comprehensive electronic record of weighbridge use and thus cargo transportation and handling.

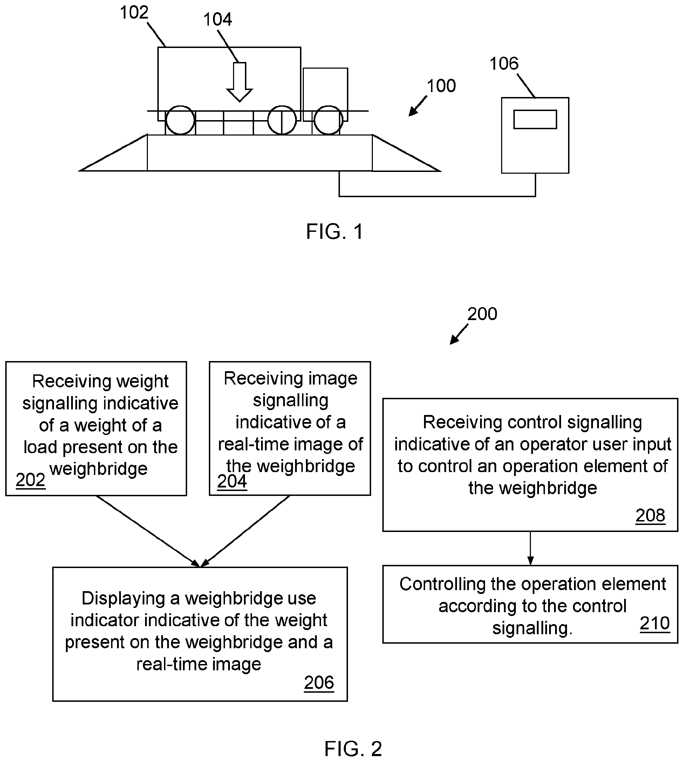

Figure 1 show an example of a weighbridge 100. In this example, a surface-mounted weighbridge is shown as a platform onto which a vehicle 102 can drive via an entry ramp. The vehicle 102 can then stop on the platform to allow for weighing. Following weighing, the vehicle 102 can drive off the platform via an exit ramp. Load cells are present underneath the weighing platform, and determine the force applied onto the platform and transmit this information to a readout apparatus 106. A surface-mounted weighbridge may comprise side rails to help ensure safe positioning of the vehicle on the weighing platform. A surface-mounted weighbridge may be easier to install and may be moved to different locations if necessary than a pit-mounted weighbridge. Pit-mounted weighbridges are another example of a weighbridge, which are more permanent in installation due to the pit present underneath the vehicle platform. The platform is level with the road surface in a pit-mounted weighbridge, with a pit underneath housing the weighbridge foundations. In the foundations of the weighbridge, under the platform, one or more load cells are located and can measure the force 104 (weight) being applied onto the platform. Examples disclosed herein may be used with any type of weighbridge.

Figure 2 shows an example of a method 200 of remote operation of a weighbridge according to examples disclosed herein. The method 200 is illustrated as comprising steps 208, 210 performed at the weighbridge, and steps 202, 204, 206 performed at a user terminal located remotely from the weighbridge.

The method 200 is computer implemented, and is for remote operation of one or more weighbridges 100. The method 200 comprises receiving, at a user terminal comprising a display, weight signalling from a weighbridge, the weight signalling indicative of a weight of a load present on the weighbridge 202. The method 200 comprises receiving, at a user terminal comprising a display, image signalling from an image capture device located at the weighbridge, the image signalling indicative of a real-time image of the weighbridge captured by the image capture device 204. The method 200 then comprises displaying, on the display, a weighbridge use indicator indicative of the weight present on the weighbridge in dependence on the weight signalling and a real-time image of the weighbridge in dependence on the image signalling 206. Displaying the weighbridge use indicator 206 may comprise displaying the weight of a load currently present on the weighbridge in dependence on the received weight signalling. In this way, data captured at the weighbridge 100 is transmitted to a remote user terminal to allow a remote weighbridge operator to monitor activity at the weighbridge, including seeing what is happening at the weighbridge via the real-time imaging, and obtaining information about the weight measured by the weighbridge via the weight signalling.

Furthermore, the method 200 comprises receiving, from the user terminal, control signalling indicative of an operator user input to control an operation element of the weighbridge 208; and in response to receiving the control signalling, controlling the operation element according to the control signalling 210. In this way, a remote weighbridge operator using the remote user terminal is able to control the operation of the weighbridge.

The combination of information being obtained at the weighbridge 202, 204 and being transmitted to the remote user terminal for display 206, and the ability of the remote user terminal to control operation of the weighbridge 210 by transmitting control signalling 208, advantageously allow for remote operation of the weighbridge.

In some examples, the method 200 comprises retrieving, at the user terminal, load information indicative of an identifier of the load. The load may be considered to be the vehicle and any cargo or goods carried by the vehicle. The load information may be data relating to the vehicle and load in the vehicle to be weighed and may indicate, for example, a time and date of weighing, a haulier ID for the vehicle, an origin and/or a destination of the vehicle, an indication of the nature of the load carrier by the vehicle, a gross weight of the vehicle when empty, a vehicle registration number, a driver ID, a remote weighbridge operator ID, or other information identifying the weighbridge transaction. The load information may then be associated with the weight of the load determined from the weight signalling. For example, the weight measured by the weighbridge may be added to the load information to provide a transaction record which details both the vehicle and load details with the measured weight. This load information, now associated with the weight of the load, may then be logged.

In some examples, there may be plural image capture devices, for example to capture images of all four corners of a weighbridge platform and/or to capture images of all four sides of the weighbridge platform. In some examples, the image capture device may comprise an automatic number plate recognition, ANPR, device, which is configured to determine a vehicle registration number from the real-time image of the weighbridge, and transmit the vehicle registration number to the user terminal. The vehicle registration number obtained from the automatic number plate recognition may, for example, be automatically logged alongside other information captured during use of the weighbridge, and may reduce human error associated with manual logging of a vehicle registration. In some examples, the vehicle registration number may be displayed on the display with the weighbridge use indicator. In this way the remote weighbridge operator is presented with the vehicle registration number as well as an indication of the weight on the weighbridge, to aid assessment of weighbridge use by being able to centrally see relevant information relating to the vehicle using the weighbridge.

The step of receiving control signalling indicative of an operator user input to control an operation element of the weighbridge may comprise one or more control inputs to operate some element of the weighbridge. The operation element may comprise an entry barrier to the weighbridge, and the control signalling controls movement of the entry barrier. For example, the remote weighbridge operator may receive an indication that a vehicle wishes to enter the weighbridge, for example by viewing a video feed streamed to the user terminal and displayed on the display, and/or by receiving a call from the driver requesting entry to the weighbridge, and/or by receiving data on the user terminal relating to the weighing transaction the vehicle wishes to carry out at the weighbridge. The remote weighbridge operator can then send control signaling to open the entry barrier to allow the vehicle to access the weighbridge once they are happy the vehicle is authorized to access the weighbridge and they have the information they need to remotely monitor the weighbridge use. Similarly, the operation element may comprise an exit barrier from the weighbridge, and the control signalling controls movement of the exit barrier. For example, once the remote weighbridge operator is satisfied that a weighing operation has been carried out successfully (e.g. the weight has been recorded and logged against other details of the weighing transaction, the vehicle registration number has been recorded, and/or the driver has provided any information required by the remote weighbridge operator), the remote weighbridge operator can control the exit barrier to allow the vehicle to leave the weighbridge.

As another example, the operation element may comprise a traffic light indicator, and the control signalling controls light output by the traffic light indicator. For example, when the remote weighbridge operator is satisfied it is appropriate for the vehicle to advance from the entrance and drive onto the weighbridge, they may control the traffic light at the entrance to the weighbridge to change from a red "stop" light output to a green "go / advance" light output. As another example, when a vehicle is on the weighbridge, and the remote weighbridge operator is satisfied that a weighing operation has been completed, they may decide that it is appropriate for the vehicle to move off the weighbridge and exit. Then, the remote weighbridge operator may control a traffic light at the exit of the weighbridge to change from a red "stop" light output to a green "go / advance" light output. This may be, for example, once the exit barrier has been opened.

As another example, the operation element may comprise the image capture device, and the control signalling may be configured to control operation of the image capture device. For example, the remote weighbridge operator may control the image capture device from the remote user terminal, e.g. to adjust the direction of the image capture device to image a different field of view at the weighbridge, to record a snapshot of a live video feed, to control a zoom function of the image capture device, to activate a night vision operation mode if the field of view is dark, to restart or reset an image capture device, or control other functionality of the image capture device.

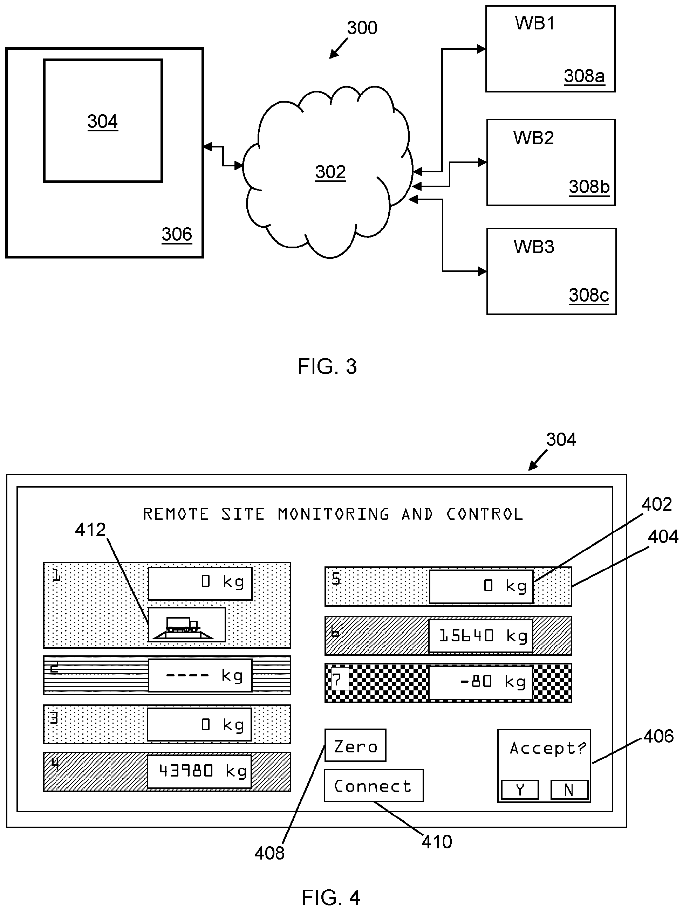

Figure 3 shows an example system 300 comprising a plurality of weighbridges 308a, 308b, 308c which can communicate with a remote user terminal 306 via the cloud 302. The remote user terminal 306 comprises a display screen 304. In other examples the cloud 302 may be a remote server. In this example, a remote weighbridge operator using the user terminal 306 is able to monitor and control plural weighbridges 308a, 308b, 308c from their single remote location. In some examples the remote terminal may be located at one of the weighbridges 308a, 308b, 308c but remote from at least one of the other weighbridges 308a, 308b, 308c. While three weighbridges 308a, 308b, 308c are illustrated it will be appreciated that there may be more or less than three, and they may be located at one or more locations in groups of one or more.

In such examples where there are plural weighbridges, the method of controlling the weighbridges may, following from Figure 1, comprise receiving, from each of the plurality of weighbridges 308a, 308b, 308c, at the user terminal 306, weight signalling indicative of a weight of a load present on each of the weighbridges, and receiving image signalling from respective image capture devices located at each of the weighbridges 308a, 308b, 308c, the image signalling indicative of a real-time image of each of the weighbridges captured by the image capture devices. The method then comprises displaying, on the display 304, a weighbridge use indicator for each of the weighbridges 308a, 308b, 308c in dependence on the weight signalling, and displaying a real-time image of each of the weighbridges 308a, 308b, 308c in dependence on the image signalling. The method also comprises receiving, from the user terminal 306, control signalling indicative of an operator user input to control an operation element of at least one of the weighbridges 308a, 308b, 308c; and in response to receiving the control signalling, controlling the operation element of the at least one of the weighbridges 308a, 308b, 308c according to the control signalling.

The method may be considered to take place in the cloud 302 which may process, reformat, store, or otherwise handle data or signalling provided by the weighbridges 308a, 308b, 308c for transmission to the user terminal 306, and which may process, reformat, store, or otherwise handle data or signalling from the user terminal 306 for transmission to the weighbridges 308a, 308b, 308c. By allowing for communication between the user terminal 306 and the plurality of weighbridges 308a, 308b, 308c via the cloud 302 or a remote server, it is possible for the user terminal 306 and the plurality of weighbridges 308a, 308b, 308c to be located at different locations and for the user terminal 306 to control each of the weighbridges 308a, 308b, 308c.

In some examples, there may be more than one user terminal 306 configured to operate with the weighbridges 308a, 308b, 308c as described for the illustrated user terminal 306. For example, if a first user terminal 306 is in communication with a plurality of weighbridges 308a, 308b, 308c and two of the weighbridges are in use at the same time, then the remote weighbridge operator at the first user terminal 306 may contact a second remote weighbridge operator to inform them, and that second remote weighbridge operation may then use a second remote user terminal (not shown) and control a second of the weighbridges in use, while the first remote user terminal 306 is used to control the first of the weighbridges in use. In such situations, the method may comprise associating a first subset of the plurality of weighbridges 308a, 308b, 308c with a first remote user terminal 306 for control by the first user terminal, and associating a second subset of the plurality of weighbridges 308a, 308b, 308c with a second different remote user terminal for control by the second user terminal.

Figure 4 illustrates an example display screen 304 on a user terminal 306 indicating information about a plurality of weighbridges. This is an exemplary schematic display of information and it will be appreciated that different arrangements of data and different data content may be provided in other examples covered in this disclosure. In this example there are seven weighbridges being monitored and able to be controlled by the user terminal, with each weighbridge having an information display area 404 displayed on the display screen 304. In this example, each information display area 404 includes a weight indicator 402 showing the weight currently being measured at that weighbridge. Also in this example, each information display area 404 includes a weighbridge use indicator in the form of a different colour (shown as a type of shading in Figure 4), wherein the weighbridge use indicator indicates a weighing status of each weighbridge.

In this example, weighbridges 1, 3 and 5 are all indicating that they are operating as expected and not currently detecting any load being weighed, as they are all showing a zero weight reading (0 kg). The shading of these weighbridge use indicators 404 may, in a colour example, be green to indicate they are ready to be used with no errors detected. Such a zero weighbridge use indicator is indicative of no load being present on the weighbridge.

In this example, for weighbridge 1 in Figure 3, an image feed/video feed 412 of the weighbridge is also displayed. This image feed 412 (if static images are displayed) or video feed 412 (if video is streamed and displayed) may also, or instead, be displayed for the other weighbridges in other examples. Advantageously in some examples, the remote user terminal operator can remotely control whether or not to view images 412 of the weighbridge, and may decide not to stream images, thereby reducing bandwidth use if there is nothing notable to see at the weighbridge (e.g. a zero reading is displayed 402). In some examples a prompt may be displayed on the display screen for the remote operator to choose to view live video or capture an image snapshot of the weighbridge. In some examples the image/video feed 412 may be automatically displayed, for example in response to the determination that there is activity at the weighbridge, determined by the change in weight being detected. In such examples, advantageously, bandwidth use may be reduced compared with streaming all images all the time and a change in weight triggering the automatic display of image/video feed 412 of the weighbridge allows for automatic detection while still reducing bandwidth use compared with always-on image streaming. A combination of automatically displaying image/video feed 412 in response to a detected trigger event (e.g. a change in weight), as well as allowing for manual control, can provide a flexible system while reducing bandwidth use compared with always-on video streaming .

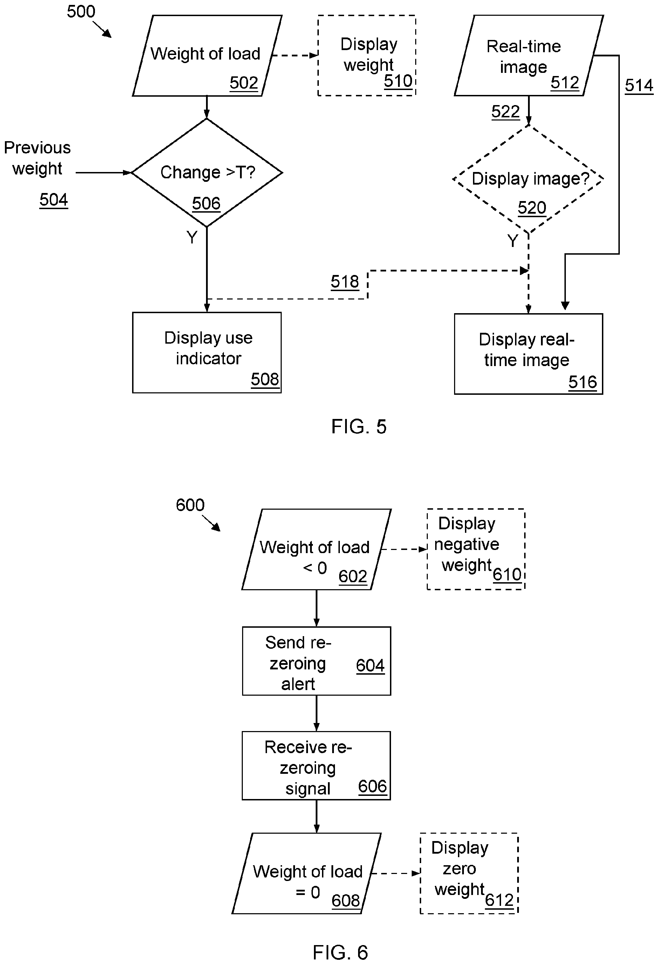

In this example, weighbridges 4 and 6 are indicating that there is a change in weight detected on the weighbridge. This may be because there was previously no load present on the weighbridge, and now a vehicle has driven onto the respective weighbridge and the weight is being measured (43980kg for weighbridge 4 and 15640kg for weighbridge 6). The shading of these weighbridge use indicators 404 may, in a colour example, be amber (or orange, or yellow) to indicate the weighbridge is in use and requires operator attention, for example to log the weight, register that the vehicle has been weighted, or to open an exit barrier, for example. This scenario is discussed in more detail in relation to Figure 5.

In this example, weighbridge 2 is indicating that there is an error in communication, and there is no communication present between the weighbridge and the user terminal. The shading of this weighbridge use indicator 404 may, in a colour example, be grey to indicate the weighbridge is offline, or not functional. In this example, weighbridge 7 is indicating that there is an error in weight measurement because a negative weight is being measured, which is not realistic. The shading of this weighbridge use indicator 404 may, in a colour example, be red to indicate the weighbridge is measuring a non-sensical weight reading and needs to be zeroed. The scenario is discussed in more detail in relation to Figure 6

Also illustrated on the display screen 304 is a "zero" object 408 (e.g. an icon, a button, an indicator), which the user terminal operator may use to provide an input and carry out a zeroing operation (in some examples the zero object 408 may be an indicator which indicates to the operator that a separate "zero" input device, such as a keyboard button, can be used to carry out a zeroing operation). In this example, the zero object 408 may indicate, and/or be used to, carry out a zeroing operation for weighbridge 7, which is registering a negative weight measurement. In other examples, in the event that a weighbridge is not operating as expected (it may be offline as per weighbridge 2, or may be registering a negative weight as in weighbridge 7), a message may be displayed on the screen such as "Site 7 outbound weighbridge not zero" alongside a zero object 408, to allow the operator to perform a zeroing function. The zero object 408 in some examples may only be displayed when one of the weighbridges is registering a negative weight reading, advantageously providing both a mechanism for zeroing the weighbridge only when such an operation is required, and not displaying the zero object if there are no weighbridges which need to be zeroed.

Also illustrated on the display screen 304 is a "connect" object 410 (e.g. an icon, a button, an indicator), which the user terminal operator may use to provide an input and connect to a particular one of the weighbridges in order to provide a control input to that weighbridge. For example, if the operator wishes to move a barrier of a particular weighbridge, operate an ANPR camera to log a vehicle registration number plate at a particular weighbridge, or perform any other control operation off a particular weighbridge, the operator can use a "connect" object to connect to a particular weighbridge and control some aspect of it. A user input to connect to a weighbridge may, in some examples, cause an additional window or display screen to be shown which allows for the operator to control different elements of a particular weighbridge.

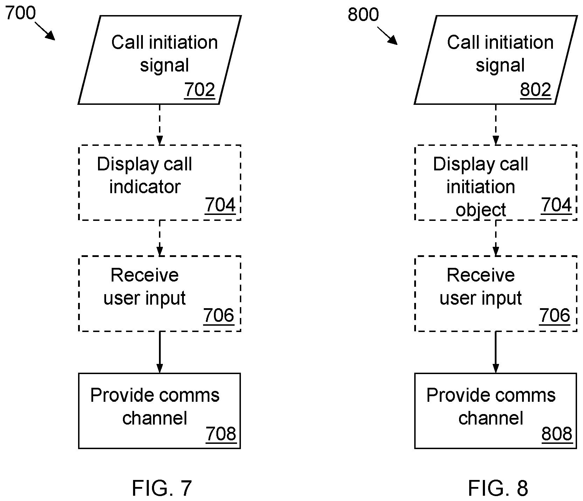

Also illustrated on the display screen 304 is a "call" object 406 (e.g. a widget, an icon, a button, an indicator), which the user terminal operator may use to communicate with a particular weighbridge. For example, if the operator wishes to speak to a driver at a particular weighbridge, they may place a call using the object 406. Similarly, if a driver at a weighbridge wishes to speak to the operator, the object 406 may indicate that there is an incoming call (and may indicate which weighbridge the call is being placed from) so the operator can accept the call and speak to the driver or other person at the weighbridge. The call may be placed such that the call is made through the user terminal, or may cause the call to be routed to a headset or telephone device separate form the user terminal in some examples, such as the operator mobile telephone. Calls between the weighbridge and the user terminal are discussed in more detail in relation to Figures 7 and 8.

Figure 5 is a flow diagram 500 illustrating an example of indicating a detected weight change. A weight of a load on the weighbridge is provided as weight signalling in step 502. This weight may be displayed 510, as in the display element 402 of Figure 4. In step 506, it is determined, in dependence on the weight signalling 502 and a previous weight 504 present on the weighbridge, whether there is a change in weight present on the weighbridge. If this change in weight exceeds a predetermined threshold, then the method moves to step 508. The threshold may be a difference in weight greater than a fluctuation which may be measure due to something other than the weight of the vehicle per se changing - for example, if a wind blows, if the engine activity changes, or within the tolerance of the weight measurement equipment. In this way a change in weight is registered because of an actual change in the vehicle on the weighbridge, such as addition or removal of cargo, a driver or passenger leaving or entering the vehicle, or a change in parking position of the vehicle to try and fraudulently alter the actual weight of the vehicle, for example.

In step 508, a use indicator such as an indicator 404 of weighbridges 1, 3 and 5 in Figure 4, is displayed to show that the weighbridge is in use and a weight change has been registered by the weighbridge. In response to determining the change in weight present on the weighbridge exceeds the predetermined threshold, the weighbridge use indicator is displayed 508, indicative of the change in weight present on the weighbridge.

In this example, there is also a real-time image captured of the weighbridge 512 (and if there is a vehicle present on the weighbridge, an image also of the vehicle). For example, a closed-circuit television (CCTV) camera may be directed to record images of the weighbridge. A determination is made in step 520 whether to display the real-time image at the display of the user terminal. This may be triggered by a user terminal operator making an input to cause the images to be displayed on the display 561 in some examples. Displaying the real-time image of the weighbridge may comprise displaying, on the display, an image indicator indicative of the availability of a real-time image of the weighbridge. Then, if the remote operator wishes to view the images, they can provide an input to allow this. In other words, display-on signalling may be provided, indicative of an operator user input, to cause the real-time image to be displayed on the display. Then, the real-time image of the weighbridge can be displayed on the display in response to the display-on signalling. Advantageously, the remote user terminal operator can remotely control whether or not to view images of the weighbridge and may decide not to stream images, thereby reducing bandwidth use.

In some examples, as shown by path 518, the determination that a change in weight has taken place may trigger the display of the images 516. In other words, transmitting the image signalling to the remote user terminal may be performed in response to determining that the change in weight present on the weighbridge exceeds a predetermined threshold. Advantageously, the images of the weighbridge may be displayed automatically in response to the determination that there is activity at the weighbridge, determined by the change in weight being detected, rather than relying on human determination to stream the images. Further advantageously, this approach reduces bandwidth use compared with streaming all images all the time. Both options may be available to allow for automatic detection and human operator intervention while still reducing bandwidth use compared with always-on image streaming. In some examples there may be no such trigger and captured images may be transmitted to the user terminal for display on the display 514 regardless of any deliberate input of weight change trigger causing their display, which may be desirable in busy weighbridge locations or for security or monitoring requirements.

Figure 6 is a flow diagram illustrating an example of remotely zeroing a weighbridge. In some cases, there may be an erroneous reading determined at the weighbridge. This may be due, for example, to wear and tear, weather conditions, drift of electronic readings over time, or other factors, causing the weighing elements of the weighbridge (e.g. springs, load cells) to determine that there is a negative weight present on the weighbridge, which is not physically possible. This may be displayed as per weighbridge 7 in Figure 4, shown as registering -80kg.

To correct this, the computer-implemented method 600 as shown in Figure 6 may perform steps to re-zero the weighbridge, which can be performed remotely by the weighbridge operator at the user terminal, rather than requiring an on-site operator to adjust the weighbridge. Figure 6 shows a method 600 of receiving, from the weighbridge, weight signalling indicative of a negative weight value of a load currently present on the weighbridge 602. This negative weight may be displayed to the remote operator on the display 610. In response to receipt of the weight signalling indicative of a negative weight value present on the weighbridge, the method then displays a zeroing alert on the display to indicate that zeroing of the weighbridge is to be performed 604. Following this, the method 600 comprises receiving a zeroing signal indicative of the operator user providing a zeroing input in response to the displayed zeroing alert 606. In response to receiving the zeroing signal at the weighbridge, the method comprises zeroing the weighbridge to measure a zero weight on the weighbridge 608. This zero weight may then be displayed 612 to indicate that re-zeroing has successfully been performed. A log of the procedure may be automatically recorded, for example to provide a secure record of adjustments made to avoid fraud or to monitor maintenance of the weighbridge (for example, a repeated or frequent requirement to re-zero the weighbridge may indicate a fault with the weighbridge equipment which should be rectified). In some examples such as for weighbridge 1 in Figure 3, a video feed of the weighbridge may be automatically displayed, or a prompt displayed on the display screen for the remote operator to choose to view live video of the weighbridge, in response to a negative weight measurement being provided from the weighbridge, so that the remote operator is able to see what is happening at the weighbridge to assist in the decision to re-zero it (for example, the operator may see if anything looks like it is broken or has been tampered with to assist in deciding to re-zero the weighbridge).

Figures 7 and 8 are flow diagrams illustrating examples of communication between a weighbridge and a user terminal. In Figure 7, a method 700 of establishing a call between call apparatus at the weighbridge and the remote user terminal originating at the weighbridge is shown. In step 702, the user terminal receives, from a call apparatus at the weighbridge, call initiation signalling indicative of a weighbridge user initiating a communication connection from the call apparatus at the weighbridge to the user terminal. In step 708, a communication channel is then provided between the call apparatus at the weighbridge and the user terminal. Thus communication (in the manner of an intercom or telephone call) can be established from the weighbridge (e.g. from a driver) to the user terminal (to the remote operator). In some examples, as shown in step 704, the method 700 comprises displaying, on the display of the user terminal, a call indicator in response to a weighbridge user initiating the communication connection from the call apparatus at the weighbridge; and in step 706, in response to the operator user providing a user input to indicate that the communication connection is accepted, via the call indicator, providing the communication channel. In this way, the remote operator can see on the display screen that someone at the weighbridge wants to speak to them, and they can accept the call and speak to the caller. By displaying the call indicator on the display screen, the operator can see how the weighbridges being monitored are currently being used to prepare them for the call. The call indicator may show, for example, which weighbridge the call is being placed from and what is happening at that weighbridge (e.g. measuring a vehicle weight, real-time video imaging of the weighbridge, any detected errors at that weighbridge, etc).

In Figure 8, a method 800 of establishing a call between call apparatus at the weighbridge and the remote user terminal originating at the remote user terminal is shown. Step 802 shows receiving, by a call apparatus at the weighbridge, from the user terminal, call initiation signalling indicative of an operator user initiating a communication connection from the user terminal to the call apparatus at the weighbridge. In step 808, a communication channel is then provided between the user terminal and the call apparatus at the weighbridge. Thus communication (in the manner of an intercom or telephone call) can be established from the user terminal (the remote operator) to the weighbridge (e.g. to a driver). In some examples, as shown in step 804, the method 800 comprises displaying, a call initiation object (e.g. a button or widget allowing the remote user terminal operator to place a call to a weighbridge call apparatus); in step 806, receiving an operator user input via the call initiation object (i.e. the operator interacts with the call initiation object to initiate a call), and then in step 808, in response to receipt of the operator user input, providing the communication channel. In this way, the remote operator can use an object displayed on the display screen to initiate a call and speak to a person at the weighbridge. By displaying the call initiation object on the display screen, the operator can see how the weighbridges being monitored are currently being used to prepare them for the call.

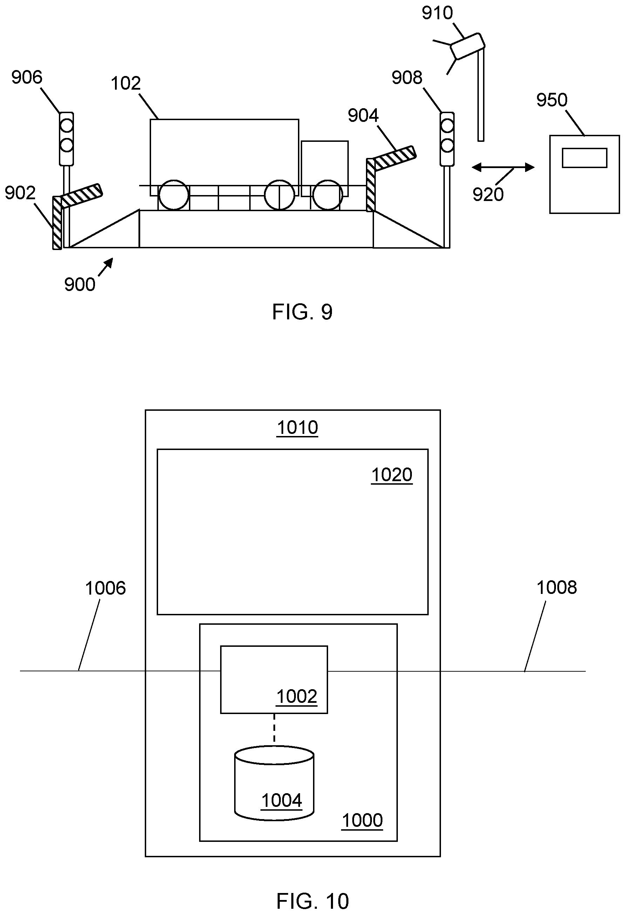

The above computer-implemented methods may be implemented in relation to a system, such as that shown in Figure 9. It will be appreciated that not all the elements shown in Figure 9 are necessary provided there is at least one weighbridge 900; and a user terminal 950 comprising a display, the user terminal 950 located remotely from the weighbridge 900. The user terminal 950 is in communication 920 with the weighbridge 900. The computer-implemented method or methods may be performed in the cloud or at a server remote from the at least one weighbridge 900.

The system may comprise, for example, a weighing platform on which the vehicle 102 to be weighted can be positioned, and one or more of: an entry barrier 902 configured to, when open, allow passage of a vehicle 102 onto the weighing platform, and when closed, prevent passage of a vehicle 102 onto the weighing platform; an exit barrier 904 configured to, when open, allow passage of a vehicle 102 off the weighing platform, and when closed, prevent passage of a vehicle 102 off the weighing platform.

The system may comprise a traffic light indicator 906, 908 configured to indicate a vehicle driving request, with respect to the weighing platform, to a driver of a vehicle. There may be a traffic light indicator 906 at the entrance to the weighbridge 900, and/or a traffic light indicator 908 at the exit of the weighbridge 900. The system may comprise an image capture device 910, such as a camera, configured to capture a real-time image of the weighbridge 900 (and therefore also of the vehicle 102 when on the weighbridge 900).

The various elements of the system 902, 904, 906, 908, 901 may be controlled by inputs provided to the remote user terminal 950, advantageously allowing for a remote weighbridge operator using the user terminal to be able to monitor and control operation (e.g. traffic flow and management, weighing operations, cargo weighing transactions) when located remotely from the weighbridge.

Figure 10 illustrates a user terminal 1010 according to examples disclosed herein. The user terminal 1010 is located remotely from one or more weighbridges and is for remote operation of the one or more weighbridges The user terminal 1010 comprises at least one controller 1000. The controller 1000 comprises at least one electronic processor 1002 having an electrical input 1006 for receiving data, such as weight signalling from a weighbridge and image signalling from an image capture device located at the weighbridge. The at least one electronic processor 1002 has an electrical output 1008 for transmitting data, such as control signalling to the weighbridge.

The controller 1000 comprises at least one memory device 1004 electrically coupled to the at least one electronic processor 1002 and having instructions stored thereon. The at least one electronic processor 1002 is arranged to access the at least one memory device 1004 and execute the instructions thereon so as to receive: weight signalling from a weighbridge, the weight signalling indicative of a weight of a load present on the weighbridge, and image signalling from an image capture device located at the weighbridge, the image signalling indicative of a real-time image of the weighbridge captured by the image capture device; display, on the display 1020 of the user terminal 1010: a weighbridge use indicator indicative of the weight present on the weighbridge in dependence on the weight signalling, and a real-time image of the weighbridge in dependence on the image signalling; and transmit control signalling to the weighbridge, the control signalling indicative of an operator user input to the user terminal and configured to control an operation element of the weighbridge.

This disclosure also covers a computer readable storage medium including instructions to perform any computer-implemented method disclosed herein. The instructions may be embedded in said one or more electronic processors 1002 of the controller 1000; may be stored in a memory 1004, or may be provided as software to be executed in the controller 1000. The memory 1004 may comprise any suitable memory device and may store a variety of data, data structures, and/or instructions thereon. For example, the memory 1004 may store instructions for software, firmware, programs, algorithms, scripts, applications that may control or cause suitable apparatus to perform all or part of the methodology described herein. The memory 1004 may comprise a computer-readable storage medium (e.g. a non-transitory, nonvolatile or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM and EEPROM); flash memory; or electrical or other types of medium for storing such information/instructions.

The controller 1000 may comprise one or more electronic processors 1002 (e.g., a microprocessor, a microcontroller, an application specific integrated circuit (ASIC), Boolean logic circuitry, etc.) that is configured to execute electronic instructions. The term "controller," "control unit," or "computational device" may be understood to include a single controller, control unit, or computational device, and a plurality of controllers, control units, or computational devices collectively operating to provide the required control functionality.

## Claims

1. A computer-implemented method for remote operation of one or more weighbridges, the method comprising:
receiving, at a user terminal comprising a display:
weight signalling from a weighbridge, the weight signalling indicative of a weight of a load present on the weighbridge; and
image signalling from an image capture device located at the weighbridge, the image signalling indicative of a real-time image of the weighbridge captured by the image capture device;
displaying, on the display, a weighbridge use indicator indicative of the weight present on the weighbridge in dependence on the weight signalling and a real-time image of the weighbridge in dependence on the image signalling;
receiving, from the user terminal, control signalling indicative of an operator user input to control an operation element of the weighbridge; and
in response to receiving the control signalling, controlling the operation element according to the control signalling.

2. The computer-implemented method of claim 1, comprising:
displaying the weight of a load currently present on the weighbridge in dependence on the received weight signalling.

3. The computer-implemented method of claim 1 or 2, comprising:
determining, in dependence on the weight signalling and a previous weight present on the weighbridge, whether there is a change in weight present on the weighbridge, the change in weight exceeding a predetermined threshold; and
in response to determining the change in weight present on the weighbridge exceeds the predetermined threshold, displaying the weighbridge use indicator, the weighbridge use indicator indicative of the change in weight present on the weighbridge;
optionally,
wherein transmitting the image signalling is performed in response to determining that the change in weight present on the weighbridge exceeds the predetermined threshold.

4. The computer-implemented method of any one of claims 1 to 3, wherein displaying the real-time image of the weighbridge comprises:
displaying, on the display, an image indicator indicative of the availability of a real-time image of the weighbridge;
receiving display-on signalling indicative of an operator user input, the display-on signalling to cause the real-time image to be displayed on the display, and
displaying the real-time image of the weighbridge on the display in response to the display-on signalling.

5. The computer-implemented method of any one of claims 1 to 4, wherein the image capture device comprises an automatic number plate recognition, ANPR, device configured to determine a vehicle registration number from the real-time image of the weighbridge and transmit the vehicle registration number to the user terminal;
optionally,
wherein the vehicle registration number is displayed on the display with the weighbridge use indicator.

6. The computer-implemented method of any one of claims 1 to 5, wherein one or more of:
the operation element comprises an entry barrier to the weighbridge and the control signalling controls movement of the entry barrier;
the operation element comprises an exit barrier from the weighbridge and the control signalling controls movement of the exit barrier;
the operation element comprises a traffic light indicator, and the control signalling controls light output by the traffic light indicator; and
the operation element comprises the image capture device, and the control signalling is configured to control operation of the image capture device.

7. The computer-implemented method of any one of claims 1 to 6, comprising:
receiving, from the weighbridge, weight signalling indicative of a negative weight value of a load currently present on the weighbridge;
in response to receipt of the weight signalling indicative of a negative weight value present on the weighbridge, displaying a zeroing alert on the display to indicate that zeroing of the weighbridge is to be performed;
receiving a zeroing signal indicative of the operator user providing a zeroing input in response to the displayed zeroing alert; and
in response to receiving the zeroing signal at the weighbridge, zeroing the weighbridge to measure a zero weight on the weighbridge.

8. The computer-implemented method of any one of claims 1 to 7, comprising:
receiving, by the user terminal, from a call apparatus at the weighbridge, call initiation signalling indicative of a weighbridge user initiating a communication connection from the call apparatus at the weighbridge to the user terminal; and
providing a communication channel between the call apparatus at the weighbridge and the user terminal;
optionally,
displaying, on the display, a call indicator in response to a weighbridge user initiating the communication connection from the call apparatus at the weighbridge; and in response to the operator user providing a user input to indicate that the communication connection is accepted, via the call indicator, providing the communication channel.

9. The computer-implemented method of any one of claims 1 to 8, comprising:
receiving, by a call apparatus at the weighbridge, from the user terminal, call initiation signalling indicative of an operator user initiating a communication connection from the user terminal to the call apparatus at the weighbridge; and
providing a communication channel between the user terminal and the call apparatus at the weighbridge;
optionally,
displaying, on the display, a call initiation object;
receiving an operator user input via the call initiation object; and
in response to receipt of the operator user input, providing the communication channel.

10. The computer-implemented method of any one of claims 1 to 9, wherein the one or more weighbridges comprises a plurality of weighbridges, the method comprising:
receiving, from each of the plurality of weighbridges, at the user terminal comprising the display:
weight signalling indicative of a weight of a load present on each of the weighbridges; and
image signalling from respective image capture devices located at each of the weighbridges, the image signalling indicative of a real-time image of each of the weighbridges captured by the image capture devices;
displaying, on the display, a weighbridge use indicator for each of the weighbridges in dependence on the weight signalling and a real-time image of each of the weighbridges in dependence on the image signalling;
receiving, from the user terminal, control signalling indicative of an operator user input to control an operation element of at least one of the weighbridges; and
in response to receiving the control signalling, controlling the operation element of the at least one of the weighbridges according to the control signalling.

11. The computer-implemented method of any one of claims 1 to 10, wherein the weighbridge use indicator comprises one or more of:
a weight change indicator indicative of a change in weight detected on the weighbridge;
a zero weighbridge use indicator indicative of no load present on the weighbridge;
an error weighbridge indicator indictive of a negative weight detected on the weighbridge; and
an offline weighbridge indicator indicative of no communication present between the corresponding weighbridge and the apparatus.

12. The computer-implemented method of any one of claims 1 to 11, comprising:
retrieving, at the user terminal, load information indicative of an identifier of the load;
associating the load information with the weight of the load determined from the weight signalling; and
logging the load information associated with the weight of the load.

13. A system comprising:
at least one weighbridge; and
a user terminal comprising a display, the user terminal located remotely from the weighbridge;
wherein the computer-implemented method of any one of claims 1-15 is performed in the cloud or at a server remote from the at least one weighbridge;
optionally, wherein the weighbridge comprises a weighing platform, and one or more of:
an entry barrier configured to, when open, allow passage of a vehicle onto the weighing platform, and when closed, prevent passage of a vehicle onto the weighing platform;
an exit barrier configured to, when open, allow passage of a vehicle off the weighing platform, and when closed, prevent passage of a vehicle off the weighing platform;
a traffic light indicator configured to indicate a vehicle driving request, with respect to the weighing platform, to a driver of a vehicle; and
an image capture device configured to capture a real-time image of the weighbridge.

14. A user terminal comprising a display, the user terminal located remotely from one or more weighbridges and for remote operation of the one or more weighbridges, the user terminal configured to:
receive:
weight signalling from a weighbridge, the weight signalling indicative of a weight of a load present on the weighbridge, and
image signalling from an image capture device located at the weighbridge, the image signalling indicative of a real-time image of the weighbridge captured by the image capture device;
display, on the display:
a weighbridge use indicator indicative of the weight present on the weighbridge in dependence on the weight signalling, and
a real-time image of the weighbridge in dependence on the image signalling; and
transmit control signalling to the weighbridge, the control signalling indicative of an operator user input to the user terminal and configured to control an operation element of the weighbridge.

15. A computer readable storage medium including instructions to perform the computer-implemented method of any one of claims 1 to 12.
